# FASCICULE DE BREVET EUROPEEN

(11) **EP 4 070 241 B1**
(45) Date de publication et mention de la délivrance du brevet: **17.07.2024**
(21) Numéro de dépôt: 20808484.8
(22) Date de dépôt: 25.11.2020
(51) Int. Cl.: G06K 19/077

(54) **PROCEDE DE FABRICATION D'UNE CARTE A PUCE RADIOFREQUENCE COMPRENANT UNE PLAQUE EN METAL AVEC UNE FENTE DANS LA PLAQUE**
DIE ERFINDUNG BETRIFFT EIN HERSTELLUNGSVERFAHREN EINER FUNKFREQUENZ-CHIPKARTE, DIE EINE METALLPLATTE MIT EINEM SCHLITZ IN DER PLATTE UMFASST
THE INVENTION CONCERNS A METHOD FOR MANUFACTURING A RADIOFREQUENCY CHIP CARD COMPRISING A METAL PLATE WITH A SLOT IN THE PLATE

(30) Priorité: 02.12.2019 EP 19306548
(43) Date de publication de la demande: 12.10.2022
(73) Titulaire: Thales Dis France SAS, 92190 Meudon (FR)
(72) Inventeur: SUBRA, Sébastien, 13881 Gémenos Cedex (FR); SEBAN, Frédérick, 13881 Gémenos Cedex (FR); CHOO, Yeow Chun Ricky, 13881 Gémenos Cedex (FR); BAJOLLE, Antoine, 13881 Gémenos Cedex (FR); TIBILETTI, Lucie, 13881 Gémenos Cedex (FR); COLOMBARD, Claude, 13881 Gémenos Cedex (FR)
(74) Mandataire: Castelo, Jérôme
(86) Numéro de dépôt international: PCT/EP2020/083401
(87) Numéro de publication internationale: WO 2021/110515

(56) Documents cités:
- US-A1- 2015 021 403
- US-A1- 2017 308 785
- US-A1- 2019 286 961

## Description

### Domaine de l'invention.

L'invention concerne un procédé de fabrication d'une carte à puce radiofréquence comprenant une plaque en métal avec une fente dans la plaque.

Elle concerne également le domaine des cartes à puce métalliques sans-contact à fente comportant des modules à puce de circuit intégré radiofréquence.

Elle vise en particulier la fabrication de carte à puce comportant une ou plusieurs feuille(s) ou plaque métallique(s) .

Les cartes à puce visées peuvent être du type hybride (contacts et sans-contact) ou purement sans-contact (sans bornier de contacts électriques).

Les cartes à puce peuvent avoir un module de carte à puce comportant sur un substrat isolant, un transpondeur radiofréquence comprenant la puce et l'antenne. Ces modules de carte à puce radiofréquence sont généralement encartés dans une cavité du corps de carte. Alternativement, seul est encarté le bornier de contacts, la puce étant sur un circuit imprimé distinct du support de bornier

L'invention vise plus particulièrement les cartes bancaires comportant un corps majoritairement métallique. Le métal peut de préférence s'étendre et être apparent sur au moins un (ou tous) des côtés du corps de carte

### Art antérieur

Le brevet FR 2743649 décrit un module de carte à puce, à antenne et/ou plages de contact, pouvant être incorporé dans une cavité de corps de carte ou pouvant former une étiquette électronique RFID.

Le brevet EP1031939 (B1) décrit une carte radiofréquence (ou sans-contact) comprenant une antenne relais bobinée en forme de huit, logée dans un corps de carte et couplée électromagnétiquement ou inductivement avec l'antenne du module. L'antenne relais comporte une bobine étroite concentrique avec l'antenne du module et une bobine large pour capter le champ électromagnétique d'un lecteur.

Par ailleurs, on connaît également des dispositifs radiofréquences hybrides, tels que des cartes à contacts et sans-contact, comportant un module de carte à puce à contacts incorporé dans un corps de carte et connecté à une antenne logée dans le corps de carte.

Par ailleurs, il existe des cartes bancaires comportant des éléments métalliques en insert à l'intérieur du corps de carte en matière plastique ou en surface externe du corps de carte tel que l'aluminium, le titane, de l'or. Le métal procure une sensation de lourdeur de la carte qui est très appréciée par les utilisateurs. Il donne aussi un aspect esthétique visible qui en fait un produit haut de gamme pour privilégiés.

On connaît aussi des cartes métalliques sans contact comportant des plaques en métal comportant une fente (ou entrefer).

Le document US2019286961 décrit un procédé de fabrication d'un dispositif de transaction comprenant les étapes suivantes de formation d'un cadre métallique définissant une périphérie extérieure, une périphérie intérieure définie par une cavité et d'au moins une fente du corps s'étendant de la périphérie externe à la périphérie intérieure du cadre métallique, d'insertion d'un composant avec module RFID dans la cavité, de remplissage de la cavité et de la fente par une matière isolante de moulage pouvant être colorée.

La demande US2019197386 décrit une carte à puce sans contact avec un ou plusieurs cadres métalliques de couplage radiofréquence. Les cadres peuvent comprendre une fente et une cavité s'étendant à travers leur largeur, en allant de la cavité vers le bord périphérique de la carte ou du cadre métallique. La cavité comprend un module radiofréquence et la fente peut comprendre un matériau de remplissage sous forme de résine active ou non.

Le document US2017308785 décrit une carte à puce sans contact avec plaque métallique, en forme d'anneau à fente, comportant un logement de réception d'un module radiofréquence. La fente peut être remplie avec une excroissance fixée à une portion de feuille supportant un substrat d'antenne.

### Problème technique.

On assiste actuellement à une demande accrue du public pour des cartes à puce lourdes intégrant des matières métalliques. Toutefois, la présence de métal perturbe fortement la communication radiofréquence et les procédés de fabrication sont rendus plus complexes pour obtenir des cartes conformes aux standards en vigueur de la carte à puce.

Une solution du demandeur consiste à générer une fente dans une plaque de métal qui empêche le signal RF d'être bloqué par le métal ou améliore les performances.

L'inconvénient de ceci est qu'il est nécessaire de la combler par une étape supplémentaire de dépôt ou de remplissage de la matière. Parfois, cette opération de remplissage n'est pas si facile car la fente peut être relativement fine, moins de (ou environ) 0,8 mm.

Par ailleurs, la fente métallique peut une ouverture sur le métal qui est clairement vu comme un défaut sur le bord ou tranche de la carte quand le métal s'étend jusqu'au bord de celle-ci ou en transparence à travers les couches externes de recouvrement de la carte.

Par ailleurs, la fente peut s'étendre dans un évidement de la plaque contenant un substrat support de circuits électriques / électronique et/ou d'une antenne. Un jeu peut exister entre le bord interne de l'évidement et le bord périphérique ou externe du substrat support (de l'antenne du corps de carte). Selon l'épaisseur des couches de couvertures externes, ce jeu et cette fente peuvent être visibles de l'extérieur par transparence à la lumière à travers la surface principale du corps de carte.

Dans certains cas, même si la fente ne débouche pas sur la tranche de la carte (cas moins préféré mais possible de l'invention, la plaque étant en retrait par rapport au bord de la carte) la plaque ne s'étendant pas jusqu'au bord, la fente et le jeu peuvent être visibles par transparence à travers la surface principale de la carte et constituer un défaut visuel.

L'invention a pour objectif un procédé de fabrication aisé (ou simplifié) de cartes à puce avec plaque de métal comportant ladite fente.

De préférence, la carte vise peut ne pas présenter ces défauts visuels.

En particulier, l'invention vise une structure de carte avec module à puce électronique radiofréquence RF hybride ou purement radiofréquence.

La carte peut également avoir une structure satisfaisant les contraintes de tenue mécanique en terme d'ISO et de durabilité dans le temps. De telles cartes peuvent être conformes notamment au standard ISO 78016 et/ ou ISO / IEC 14443 ou équivalents pour effectuer des échanges de communication à contacts et/ou de proximité avec un lecteur à contacts ou de type NFC.

L'invention propose également une structure de carte métallique avec des bords métalliques visibles procurant un maximum de poids, présentant de bonnes performances radiofréquences et facile à fabriquer. De préférence la carte ne présente pas les défauts visuels visés ci-dessus. L'invention vise à résoudre les inconvénients ou objectifs précités.

Résumé de l'invention.

Le métal utilisé pour la plaque de la carte avec fente peut être de l'acier inoxydable avec un effet métallique parfois brillant sur le bord (ou tranche) de la carte.

L'invention propose dans son principe de réaliser la matière de remplissage de la fente de la même matière que celle d'un support d'antenne logé dans un logement ménagé à l'intérieur d'une plaque de métal de la carte.

Plus précisément, pour faciliter la fabrication, le procédé prévoit de découper un substrat d'antenne avec une excroissance ou une languette correspondant à la fente.

Le substrat d'antenne (avec sa languette) est introduit dans un logement de la plaque du corps de carte en une seule opération. Ainsi il est plus aisé de remplir la fente métallique en une seule opération ou d'éviter des erreurs d'assemblage.

Cette façon de procéder de l'invention est très délicate et assez inhabituelle dans le domaine de la carte à puce compte tenu des tolérances de fabrication et de positionnement du substrat d'antenne dans un évidemment ou logement de la plaque métallique.

En général, un encartage de module dans une cavité de corps de carte s'effectue avec un module assez compact sans protubérance ou languette.

L'avantage de l'invention est de permettre en une seule opération la découpe du substrat d'antenne avec la languette.

L'invention permet d'éviter deux éléments séparés à manipuler et à insérer séparément ou distinctement dans leur logement respectif.

Grâce à la liaison de la languette au substrat, on ne risque pas de perdre la languette. Le sens de l'insertion est plus facile à repérer et permet d'éviter ainsi des erreurs d'insertion.

La languette peut servir de détrompeur lors de son insertion.

Pour faciliter l'insertion, l'invention peut prévoir d'élargir la fente, par exemple jusqu'à 2 mm, voire 3 ou 4 mm. Cette largeur demeure toutefois très étroite en proportion par rapport à la largeur d'un module ou support d'antenne d'environ 1 cm de large. La proportion en largeur de la languette peut être par exemple inférieure à 1 / 3 de celle d'un substrat d'antenne.

L'invention propose accessoirement de combler ou masquer cette fente avec une matière qui génère moins d'écarts visuels sur le bord de la carte avec le métal. Dans un mode de réalisation on peut utiliser une matière présentant un gris par rapport à une plaque en inox.

Le procédé de fabrication de l'invention, utilise de la matière provenant d'une excroissance d'un substrat d'antenne en forme de languette. Cette dernière est découpée avec ledit substrat d'antenne et l'ensemble (substrat, excroissance, antenne) est ensuite être insérée à l'intérieur d'un évidement (ou espace) de plaque de métal communicant avec ladite fente jusqu'à la périphérie de la plaque. Les formations du substrat d'antenne et de la languette sont effectuées hors du logement avant insertion dans le logement. L'excroissance peut remplir au moins partiellement la fente sur la longueur et /ou épaisseur. Un complément de matière peut être apporté par différents moyens notamment fluage de matière environnante.

Selon une alternative non-conforme à l'invention, la languette peut être fixée au substrat d'antenne par un adhésif ou tout moyen de fixation (ruban adhésif, colle...) . Ainsi, une fois fixée, la languette ainsi formée en excroissance du substrat d'antenne peut être introduite dans la fente en même temps et une même et seule opération que l'insertion du substrat d'antenne dans son logement situé dans la plaque de métal.

En outre, le même substrat sélectionné peut présenter une matière de même couleur ou de chromaticité (définie par son écart couleur en mode DE94 (2,1,1) plus bas (ou ΔE*94) que la plaque de métal et permet en une seule opération l'insertion du substrat d'antenne et le comblement de la fente.

Selon l'invention, la languette est découpée en même temps que le substrat d'antenne, la languette a la même matière et présente une continuité de matière.

Le cas échéant, pour faciliter la découpe de l'excroissance, sa manipulation et son insertion dans la fente, l'invention prévoit d'augmenter volontairement la largeur de la fente. Par exemple, cette largeur peut être doublée ou triplée jusqu'à être comprise entre 0,7 mm et 3 mm.

A cet effet, l'invention a pour objet un procédé de fabrication d'une carte à puce radiofréquence comprenant l'étape de formation d'un corps de carte contenant une plaque métallique formant une boucle autour d'un logement de réception d'un substrat d'antenne, une fente s'étendant du logement vers la périphérie de la plaque à travers la boucle ou la plaque, ladite fente étant remplie d'une matière de remplissage isolante ; ladite matière de remplissage étant obtenue au moins partiellement par de la matière d'une excroissance en forme de languette du substrat d'antenne et formée avec ledit substrat d'antenne avant son insertion dans la carte.

Le procédé est caractérisé en ce que ladite languette est découpée en même temps que le substrat d'antenne de sorte à présenter une continuité homogène de matière au niveau de sa jonction avec ledit substrat d'antenne.

L'invention permet aussi de supprimer ou atténuer le défaut visuel sur la tranche de la carte quand la fente débouche sur la tranche.

Ainsi, le procédé permet de faciliter le remplissage de la fente en une seule opération d'insertion en même temps que l'insertion du substrat d'antenne dans le logement de la plaque.

Selon d'autres caractéristiques du procédé :
- L'excroissance en forme de languette et le substrat d'antenne sont découpés dans un substrat principal intermédiaire. La position et la forme de la languette correspondent à la position et à la forme de ladite fente dans ladite plaque ;
- Il comprend une étape d'insertion du substrat d'antenne à l'intérieur du logement et d'insertion de la languette à l'intérieur de ladite fente en une seule opération ;
- Ladite fente peut être partiellement remplie par un matériau ayant un coefficient d'opacité (ou de transmission de lumière) proche à au moins 80 % de celui de la plaque métallique et/ou par un matériau présentant un écart colorimétrique par rapport à celui de ladite plaque inférieur à 10 %.

Aussi, l'invention permet d'avoir une épaisseur de feuille de recouvrement externes fines au profit d'une épaisseur maximale de plaque en métal et avec le moins de défaut visuel par transparence à travers la carte, provenant du jeu d'assemblage de la plaque avec un substrat support dans l'évidement ou de la fente.

En outre, les couches externes pouvant être transparentes ou translucides, il peut y avoir une discontinuité visible de la couleur ou aspect de la plaque de métal et de l'insert (inlay antenne). En ayant une continuité d'aspect ton sur ton entre la plaque de métal et de l'insert, les défauts d'aspect visibles de l'extérieur sont fortement atténués. - Un film, un adhésif ou une résine présentant une matière opaque ou étant d'une couleur proche de celle de la plaque métallique, peut être disposé à l'aplomb de la fente ou d'un jeu situé entre le bord périphérique du substrat d'antenne et le bord interne du logement de la plaque, sur au moins un des côtés principaux de ladite plaque.

Le procédé peut aussi comprendre les étapes suivantes de :
- formation d'un insert métallique de corps de carte contenant ladite plaque en forme de boucle autour d'un logement perméable au champ radiofréquence débouchant sur les deux faces principales de ladite plaque, ladite plaque s'étendant ou non jusqu'à au moins un des bords de la carte,
- insertion d'une antenne relais ou d'une antenne de transpondeur à l'intérieur et/ou en regard du logement,
- agencement d'un module équipé ou non d'une antenne de module radiofréquence, sur le corps de carte en regard de l'antenne relais ou de plages de connexion de l'antenne de transpondeur pour un couplage radiofréquence avec l'antenne relais ou pour une connexion électrique avec l'antenne de transpondeur ;
- L'antenne relais ou l'antenne de transpondeur peut être réalisée sur ledit substrat support intermédiaire avec une pluralité d'antennes relais ou d'antennes de transpondeur, chaque antenne relais ou antenne de transpondeur étant ensuite individualisée avec son substrat d'antenne et ladite excroissance en forme de languette, par extraction ou découpe du substrat d'antenne principal intermédiaire ;
- Il peut comprendre de préférence une étape de recouvrement de chaque face principale opposée de ladite plaque par au moins une couche externe de recouvrement.

L'invention a également pour objet un substrat d'antenne configuré pour être inséré dans un logement de carte à puce radiofréquence, ledit logement débouchant sur la périphérie de la carte à travers une fente, ladite carte comprenant une plaque métallique formant une boucle autour du logement, ladite fente s'étendant du logement vers la périphérie de la plaque à travers la boucle ou la plaque, ledit substrat d'antenne comprenant une excroissance en forme de languette pour constituer une matière de remplissage au moins partiel de ladite fente, caractérisé en ce que ladite languette est découpée en même temps que le substrat d'antenne de sorte à présenter une continuité homogène de la matière du substrat support d'antenne au niveau de leur jonction.

Selon d'autres caractéristiques,
- La carte comprend ledit substrat d'antenne défini ci-dessus inséré à l'intérieur du logement et ladite languette insérée à l'intérieur de ladite fente ;
- Ladite fente peut être partiellement remplie par un matériau ayant un coefficient d'opacité proche à au moins 80 % de celui de la plaque métallique et/ou par un matériau présentant un écart colorimétrique par rapport à celui de la plaque inférieur à 10 % ;
- Un film adhésif opaque ou coloré ou une résine adhésive opaque ou colorée peut être disposé sur au moins un des côtés principaux de ladite plaque, à l'aplomb de la fente ou d'un jeu situé entre la périphérie du substrat d'antenne et le bord interne du logement de la plaque ;
- Un film adhésif opaque ou coloré ou une résine adhésive opaque ou colorée peut être disposé(e) entre la plaque en métal et une feuille de couverture ; Ainsi, les fentes ou interstices ou discontinuités sont moins visibles par transparence à travers le corps de carte ;
- La carte peut comprendre une couche colorée ou une couche de particules métalliques imitant l'aspect de la plaque de métal sur la matière de remplissage de la fente débouchant sur la tranche de la carte.

### Descriptif des figures :

- La figure 1A illustre une étape de fabrication d'une carte radiofréquence en cours de montage, avec un espace 7 de réception de l'antenne relais 5 (ou alternativement une antenne directe de transpondeur 5B) conformément à un mode de l'invention ;
- La figure 2 est une vue en coupe de carte similaire à celle 1A de la figure 1 montrant un assemblage d'une plaque métallique 4 à des feuilles de couverture ;
- La figure 3 illustre une vue en coupe d'un exemple de carte 1A obtenue conformément à un premier mode de réalisation, pouvant comprendre les éléments de la figure 1, après insertion ou assemblage d'un module de transpondeur 10 et d'un module comprenant l'antenne relais ;
- La figure 4 illustre une vue en coupe d'un second exemple de carte obtenue conformément à un second mode de réalisation, pouvant comprendre les éléments de la figure 1, après insertion ou assemblage du module de transpondeur 3 et d'un module comprenant l'antenne relais ;
- La figure 5 illustre des étapes du procédé de l'invention selon le premier mode de réalisation conforme aux figures 2 à 3 ;
- La figure 6 illustre une structure de carte hybride (contacts et sans-contact) obtenue selon un troisième mode de réalisation avec un bloc d'antenne relais inséré dans une plaque métallique ;
- La figure 7 illustre une structure de carte purement sans-contact obtenue selon un troisième mode de réalisation avec un bloc comportant une antenne relais et un module à puce radiofréquence insérés dans une plaque métallique.
- La figure 8 illustre un bloc d'antenne relais 5 (ou d'antenne de transpondeur radiofréquence à connexion ohmique 5B) avec un emplacement 40 de module (hybride ou purement sans- contact) ;
- La figure 9 illustre une plaque en métal seule avec une fente en biais similaire à celle de la figure 1 ;
- La figure 10 illustre une étape d'assemblage du substrat support d'antenne 55 avec son excroissance 11E dans la plaque 4 et les feuilles de couverture;
- La figure 11 illustre une étape de formation d'une pluralité de substrats d'antenne 5 (ou autre circuits électriques/électroniques) sur un substrat principal ;
- La figure 12 illustre une étape de formation d'une pluralité de substrats d'antenne 5B de transpondeur radiofréquence avec ses plages d'interconnexion (ou autre circuits électriques/électroniques) sur un substrat principal 50.

### Description.

D'une manière générale, des références identiques ou similaires d'une figure à l'autre représentent un élément identique ou similaire.

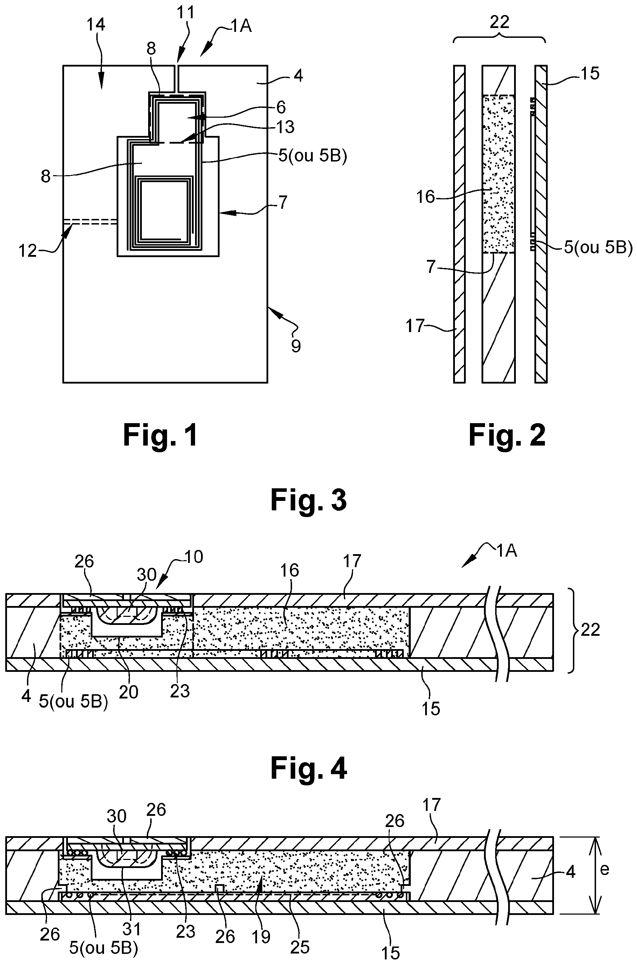

A la figure 1 est illustrée une étape du procédé de fabrication d'une carte à puce radiofréquence.

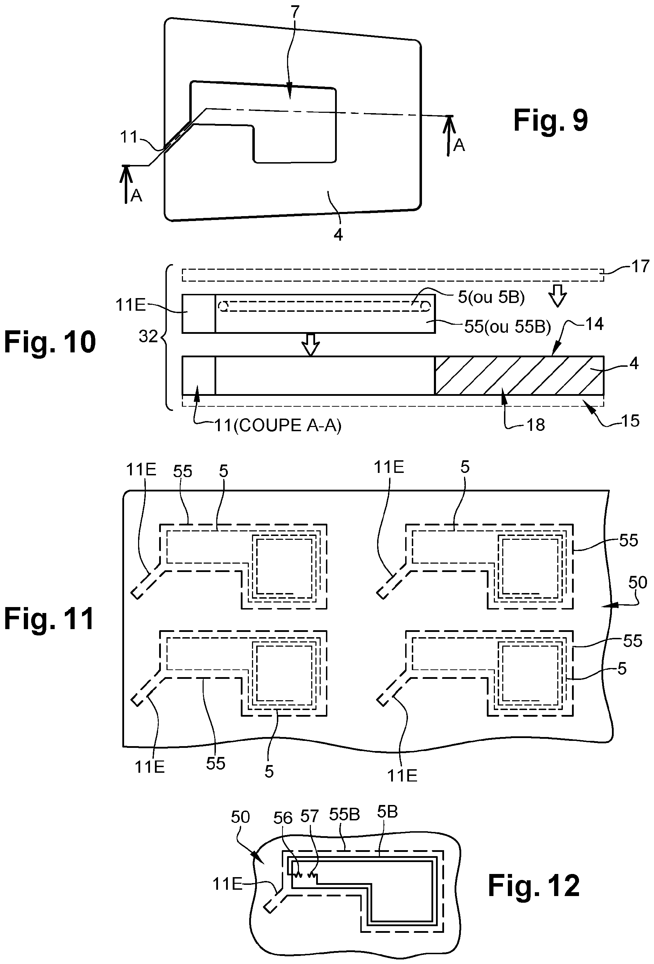

Le procédé comprend, selon un mode, une formation d'un insert métallique 1A de corps de carte comportant une antenne relais 5 ; Alternativement, l'antenne peut être une antenne normale 5B de transpondeur (ou de puce) radiofréquence destinée à être connectée directement à une puce radiofréquence (fig. 9). Des plages de connexions de l'antenne à un module ou à une puce radiofréquence peuvent être disposées sur le substrat support d'antenne.

Le procédé comprend aussi une étape d'agencement d'un module à puce et à antenne radiofréquence 10 sur le corps de carte dans un emplacement 6 en regard de l'antenne relais 5 pour un couplage radiofréquence. Alternativement le module peut être disposé en regard de plages de connexion d'une antenne 5B pour connexion électrique directe avec le module 10 de transpondeur radiofréquence, qu'il ait ou non une antenne sur le module.

Par exemple, le module avec antenne peut être connecté à une extension d'antenne disposée sur le substrat d'antenne logé dans le logement (ou cavité de la plaque en métal) pour augmenter l'inductance de l'antenne du module. Alternativement, un module sans antenne (mais avec puce radiofréquence) peut être connecté à une antenne disposée sur le substrat d'antenne logée dans le logement de la plaque métal. Une puce radiofréquence seule peut être connectée au substrat d'antenne logé dans la cavité de la plaque.

Dans l'exemple, l'insert 1A comporte ou est formé d'une plaque en métal 4. Alternativement, il pourrait comporter plusieurs plaques superposées (ou autres éléments métalliques) assemblées ensemble. Le bord 9 de la plaque 4 est destiné préférentiellement à être visible de l'extérieur du corps de carte 22 (figures 2,3).

Une antenne relais 5 (ou antenne 5B de transpondeur) est ici disposée dans le corps de carte et notamment dans un espace correspondant ménagé dans l'insert métallique. Elle peut toutefois être disposée en regard d'un espace correspondant évidé dans la ou les plaques.

Un module à puce et à antenne radiofréquence pourra être agencé dans l'emplacement 13 sur le corps de carte en regard de l'antenne relais pour un couplage radiofréquence.

Alternativement, le module 10 pourra être directement agencé sur l'antenne relais (ou son substrat support 15).

On verra par la suite différentes possibilités d'agencer le module transpondeur 10 par rapport à l'antenne relais 5 et/ou au corps de carte 22.

Alternativement, un module à puce sans antenne peut être inséré dans une cavité en face des plages d'interconnexion 56, 57 d'une antenne 5B (fig. 9).

Selon une caractéristique, le procédé comprend l'étape de formation dans l'insert d'un espace 7 perméable au champ radiofréquence, débouchant sur au moins une face principale 14 de l'insert, ledit espace étant configuré aux dimensions de ladite antenne relais 5 (ou antenne 5B) pour la recevoir à l'intérieur et/ou en regard de cet espace.

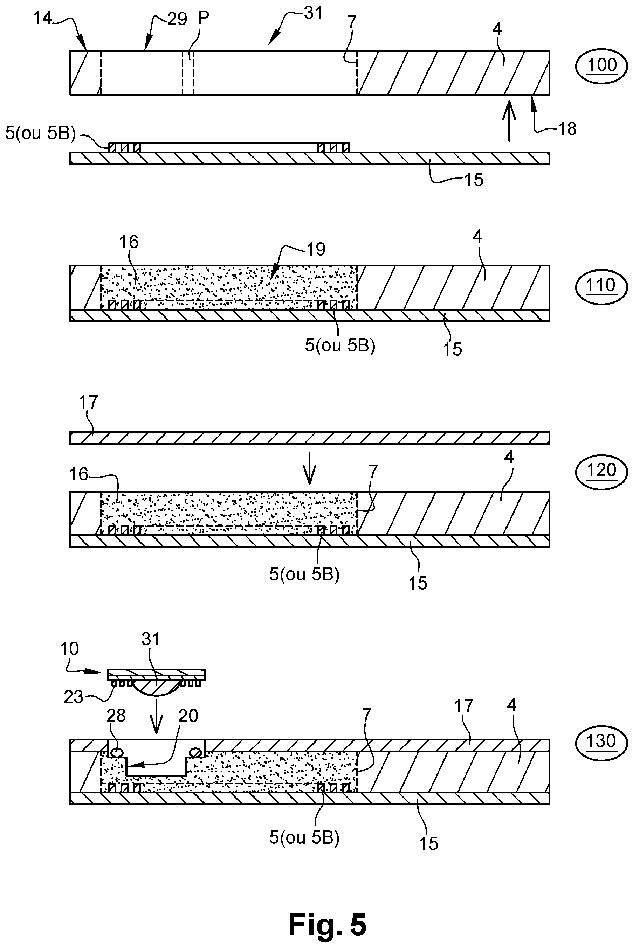

Dans l'exemple de la figure 1, (correspondant à l'étape 100, fig. 5) l'espace 7 a été usiné par estampage ou fraisage dans la plaque de métal 4.

Le procédé peut prévoir une réalisation de plaque 4 à l'unité ou une série de plaques sur une grande plaque métallique (ou un ruban métallique) qui sera ensuite découpée ou estampée, poinçonnée pour extraire chaque plaque.

L'espace perméable 7 peut se présenter sous forme d'un premier évidement (ou logement) 6 dans une zone de couplage du transpondeur à l'aplomb de l'emplacement 8 du transpondeur radiofréquence 10 et un second évidement 8 s'étendant en direction du centre de la plaque à partir du premier évidement 6. Les deux évidements peuvent communiquer entre eux de préférence mais ce n'est pas indispensable. Il peut y avoir une séparation entre les deux par exemple une barrière métallique de la plaque 4.

L'espace ou logement 7 est perméable car il est exempt de métal suite à son enlèvement par usinage.

L'espace 7 est usiné ou dimensionné de manière à correspondre sensiblement aux dimensions de l'antenne relais 5 (ou antenne normale de transpondeur 5B connectant directement par contact ou soudure les plots d'une puce radiofréquence). L'antenne relais 5 peut être comprise dans l'espace 7 (cas d'un module d'antenne relais inséré dans l'espace (fig. 3 et 4) (Idem pour l'antenne à connexion directe 5B); Alternativement (non représentée), l'antenne relais peut être en dehors de cet espace tout en lui étant en regard (cas notamment d'une antenne incrustée dans une feuille 15 assemblée à la plaque 4).

La plaque 4 comporte une fente 11 coupant (ou interrompant) la plaque dans son épaisseur et s'étendant d'une périphérie externe (ou bord) 9 de la plaque jusqu'à une périphérie interne dudit espace 7 (ou 8) perméable au champ radiofréquence.

Cependant, grâce aux performances d'une antenne relais associée au module transpondeur, cette fente 11 (ou entrefer) peut permettre de mieux satisfaire notamment des performances conformes à des standards bancaires. La fente peut permettre de meilleures performances en général que ce soit avec antenne relais (amplificatrice) couplée inductivement ou avec une antenne 5B de transpondeur directement connectée électriquement.

La fente peut permettre selon sa configuration dans la plaque et le couplage et/ou accord de fréquence avec l'antenne de transpondeur, de former avec la boucle de la plaque, une antenne relais amplificatrice.

Ainsi, il est possible de disposer dans le logement 7 de la plaque fendue radialement au logement, un transpondeur radiofréquence (puce connectée à une antenne) couplé à une antenne relais amplificatrice (boucle formée par la plaque fendue) . La fente de la plaque peut constituer un condensateur de l'inductance formée par la plaque en forme de boucle. La boucle ainsi formée peut constituer une antenne amplificatrice de la communication radiofréquence.

Un effet de résonnance peut être obtenu en accordant la boucle (formant une spire et un condensateur au niveau de la fente) en tant que circuit résonnant configuré pour résonner avec le circuit de transpondeur radiofréquence logé dans ledit espace perméable aux ondes radiofréquences (ou logement de réception du substrat d'antenne).

Une autre fente alternative 12 (ou supplémentaire par rapport à la fente 14), peut déboucher dans le second évidement.

Une fente ou jeu peut exister entre le bord interne de l'évidement 7 et la périphérie du substrat support 25 ou 55 d'antenne 5 ou 5B.

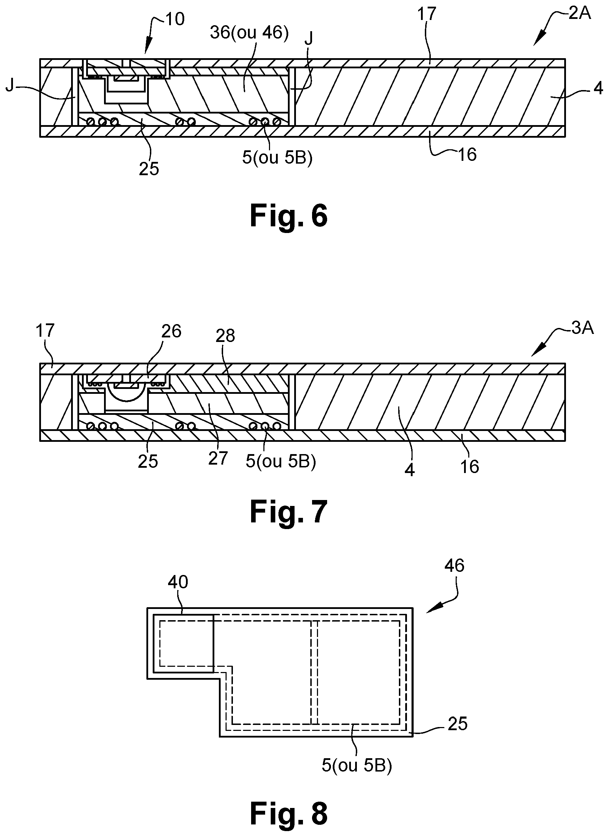

Ce jeu J (fig. 6) peut être visible par transparence à travers la face principale du corps de carte au même titre que la fente 11 s'étendant à travers la boucle 4 fig. 6).

Selon une caractéristique additionnelle pour tous les exemples, le procédé peut prévoir un recouvrement dudit espace 7 par une matière de remplissage 16 et un assemblage d'une feuille de couverture 15 (et/ou 17) sur au moins une face principale de l'insert.

Dans l'exemple figure 5, correspondant à l'étape 100, une feuille 15 comportant l'antenne relais 5 (ou alternativement 5B) peut être assemblée par laminage et/ou collage à la plaque métallique après qu'elle ait été évidée pour former l'espace 7.

Une autre feuille 17 peut être assemblée (étape 120) sur la face 18 opposée de la plaque 4 à celle recevant la première feuille 15, après que la matière de remplissage 19 ait été déposée dans l'espace 7.

L'espace 7 peut être rempli d'une matière 19 de remplissage, garnissage telle une résine polymère.

Alternativement, les feuilles de recouvrement épaisses 15, 17 peuvent fournir de la matière destinée à fluer dans l'espace ou jeu J pour le remplir au cours d'un pressage et chauffage de ces feuilles. Avantageusement, cette matière peut être opaque ou présenter une opacité ou couleur ou chromaticité proche de celle de la plaque de métal.

Alternativement, la matière 19 peut être introduite dans l'espace 7 via un orifice dans une des deux feuilles 15 ou 17 ou via une fente 11 ou 12 (figure 1).

Selon la formule ΔE94, (ou DE94) adoptée par la C.I.E. en 1994, l'écart colorimétrique préféré ΔE94 pour la mise en oeuvre de l'invention quel que soit le mode de réalisation peut être inférieur à 4 %, voire inférieur 10 %.

Selon une caractéristique, l'antenne relais 5 (ou antenne normale 5B) peut être réalisée sur un substrat support 15, 25 comme sur les figures 2, 4 ou 5 puis le substrat d'antenne (5 ou 5B) est inséré dans l'espace perméable.

Sur les figures 2, 3 et 5, la feuille substrat 15 est assemblée sur la face inférieure 18 en surépaisseur par rapport à la plaque.

Par contre, sur un autre mode de réalisation (fig. 4), le substrat 25 peut présenter des dimensions sensiblement inférieures aux dimensions de la cavité 7 et peut donc être inséré dans l'épaisseur « e » de la plaque 4 ;
Alternativement, l'antenne relais 5 (ou 5B) peut ne pas être formée sur un substrat mais peut être prédécoupée dans du métal puis est posée dans la cavité 7 sur un fond isolant de la plaque (par exemple, une feuille 15 sans antenne préformée dessus).

L'antenne peut être formée à l'aide de toute technologie de formation d'antenne connue de l'homme de l'art, notamment par impression ou jet de matière conductrice, gravure.

A la figure 4, le substrat 25 portant l'antenne relais 5 (ou alternativement 5B) peut être calé dans l'espace 7 à l'aide d'excroissances ou épaulements 26 s'étendant de la face interne de l'espace 7 vers l'intérieur de de l'espace.

L'espace 7 peut donc être configuré de manière à former un plan de calage d'un substrat support 25 de l'antenne relais 5 (ou 5B) dans l'épaisseur de l'insert ou de la plaque 4.

L'antenne 5 (ou 5B) peut être incrustée par ultrasons dans le substrat support 25. Et une autre feuille de recouvrement ou de décoration 15 est assemblée pour recouvrir l'ouverture de l'espace 7 par-dessus le substrat d'antenne relais 5 (ou 5B) .

A l'étape 130, (fig. 5), le procédé peut prévoir de former une cavité 20 de réception (ou emplacement) d'un module transpondeur radiofréquence 10 puis l'encartage de ce module dans son emplacement 6, 13 pour un couplage inductif avec l'antenne relais 5 (ou alternativement une connexion ohmique directe dans le cas d'une antenne 5B).

Sur la figure 3 est illustré un insert de carte à puce ou une carte à puce radiofréquence 22. La carte comprend un insert de corps 22 de carte avec une antenne relais 5 et un module 10 équipé d'une antenne 23 de module radiofréquence, agencé sur le corps 22 de carte, en regard de l'antenne relais 5 pour un couplage radiofréquence avec elle ; Alternativement, l'antenne peut être à connexion directe ohmique 5B et le module être sans antenne de transpondeur).

La carte comprend aussi un espace 7 perméable au champ radiofréquence, formé dans la plaque métallique 4 et débouchant sur au moins une face principale de la plaque métallique ; L'espace est configuré aux dimensions de l'antenne relais 5 (ou antenne 5B) pour la recevoir à l'intérieur et/ou pour être en regard de l'antenne relais (ou antenne 5B);
La carte peut comprendre aussi une matière de remplissages 16 ou 19 recouvrant l'espace 7. La carte peut comprendre alternativement ou cumulativement à cette matière 16, 19, une feuille de couverture 17 assemblée sur au moins une face principale 14 de l'insert 22 ou de la plaque 4.

La figure 4 diffère de la figure précédente en ce que le substrat 25 de l'antenne relais (ou alternativement antenne à connexion directe 5B) est inséré dans l'épaisseur « e » de la plaque métallique 4. Le substrat 25 reçoit normalement une autre feuille de recouvrement 15 sur sa face externe.

A la figure 3, l'antenne est formée ou supportée directement sur la feuille de recouvrement ou feuille externe 15 pour faciliter la mise en oeuvre.

Selon une caractéristique avantageuse, l'invention peut prévoir de réaliser séparément un ensemble « tag » (Bloc ou ensemble de transpondeur radiofréquence) comprenant un assemblage de l'antenne relais 5 (ou antenne 5B) avec le module radiofréquence (avec ou sans antenne à bord) ; Puis ce dernier ensemble « tag » est inséré dans l'espace 7. L'ensemble peut comprendre ou pas de la ferrite. Un tel « tag » est divulgué par le demandeur sous la référence Thales DIS / 0159GCTA.

Le tag peut comprendre de préférence un module purement radiofréquence sans plages de contact 26.

Un tel tag peut comprendre une structure bloc comprenant l'antenne relais 5 (ou antenne 5B) noyée dans un corps isolant et un module radiofréquence couplé inductivement à cette antenne relais (ou connecté ohmiquement à une antenne 5B à des plages d'interconnexion 56, 57).

Ce bloc peut être découpé ou formé aux dimensions de l'espace 7 puis inséré dans l'espace 7 de la plaque 4. Ensuite, une feuille de recouvrement peut être assemblée sur chaque face 14, 18 de la plaque notamment à l'aide d'une résine qui peut coller les feuilles et remplir l'interstice (J) entre la structure bloc « tag » et les bords internes de l'espace 7 (fig.6).

L'antenne relais 5 (ou 5B) peut être de préférence une antenne optimisée configurée sans plaque de condensateur, avec seconde boucle (ou spirale) enchevêtrée dans une première boucle (ou spirale) en sens inverse. Le principe d'une telle antenne est décrit dans la demande de brevet internationale WO2016188920.

L'antenne relais peut présenter une surface totale comprise entre 1/3 et 1/4 de la surface principale de la carte.

L'antenne relais peut par exemple présenter une surface totale égale à 6 ou 7 fois la surface de l'antenne 23 du module.

Un module radiofréquence 10 selon l'invention peut comprendre ceux connus du domaine de la carte à puce.

Un module de carte à puce peut comporter un substrat isolant, un transpondeur radiofréquence comprenant la puce 30 et l'antenne 23 de module. Ces modules de carte à puce radiofréquence sont généralement encartés dans une cavité 20 du corps de carte 22. La puce radiofréquence 30 et ses connexions à l'antenne de module peuvent être enrobées de matière ou résine de protection 30.

Alternativement, le module peut avoir une structure plus fine si fabriquée comme celle d'une étiquette RFID.

Alternativement, le module peut juste porter la puce radiofréquence ou hybride sans l'antenne de transpondeur.

L'invention peut avoir l'avantage de réutiliser une structure connue d'un (mini) « tag » pour l'insérer tel que dans un espace ménagée dans une plaque métallique 4 et former ainsi une carte sans-contact métallique lourde avec de bonnes performances radiofréquences.

Les performances sont sensiblement les mêmes que le tag seul puisque l'espace du tag dans la plaque 4 est perméable au champ électromagnétique.

A la figure 6, est illustrée une carte métallique 2A qui diffère de la structure de la figure 4 par le fait que l'antenne relais 5 (ou alternativement 5B), ou son insert ou substrat support 25 est assemblé à un bloc polymère ou corps de carte polymère 36 (ou 46) préalablement à son assemblage dans la carte 2A.

L'insert ou bloc 36 peut bénéficier d'un jeu J d'assemblage avec la plaque 4. Ce jeu peut être comblé soit par laminage ou adjonction de résine ou colle d'assemblage des feuilles de couvertures 16, 17.

Le module à antenne 10 est encarté comme aux figures 3 ou 4.

Le bloc 36 (ou 46) (fig.8) peut ensuite être découpé ou extrait (aux dimensions de la cavité 7 de la plaque 4 notamment par poinçonnage, d'une grande feuille comportant une pluralité d'antennes relais comme à la figure 11. La figure 8 peut illustrer l'antenne relais 5 (ou l'antenne 5B) soit sur un substrat 25, soit sur un bloc 46 (5, 25, 36) comprenant une matière isolante 36 assemblée au substrat 25 d'antenne relais 5 (ou antenne 5B).

Alternativement, selon un mode de réalisation pratique, l'antenne relais 5 (ou antenne 5B) peut être formée sur (ou noyée dans) un substrat ou bloc de matière polymère (résine de moulage) ou toute matière perméable aux champs électromagnétiques et dont les dimensions correspondent sensiblement ou sont légèrement inférieures à celles d'un évidement (ou cavité) 7 d'une plaque de métal 4.

Alternativement à la figure 6, est illustré un autre mode de réalisation à la figure 7 qui diffère de la figure 6 en ce que le bloc d'antenne relais (ou antenne 5B) 46 comporte lui-même un module purement radiofréquence (sans plage de contact externes 26).

Le bloc 46 de l'antenne relais (ou antenne 5B) peut comporter un noyau de ferrite 27 assemblé entre le substrat 25 d'antenne relais et une feuille ou couche isolante notamment polymère 28. Ce noyau peut s'étendre sur toute la surface de l'insert 46. Il peut y avoir une cavité de réception d'une partie de module purement sans-contact 40 ménagé dans ce noyau ou plaque de ferrite.

Tout ou partie de ce bloc 46 peut comprendre de la ferrite notamment entre les couches 25 & 26 (pour plus de couplage entre l'antenne relais et le transpondeur).

Le module à puce de transpondeur radiofréquence 40 peut être monté sur un insert 36 ou 46 de l'antenne relais (ou antenne 5B), lui-même avant ou après son assemblage dans ou avec la plaque métallique.

L'antenne relais 5 (ou antenne 5B) peut être déposée nue dans la seconde cavité ou évidement de la plaque, puis recouverte de résine.

Elle peut être formée sur un substrat diélectrique notamment par gravure électrochimique, à la manière d'un module de carte à puce sur un ruban isolant diélectrique.

L'antenne relais 5 (ou 5B) peut être de préférence fabriquée ou configurée de manière à former une capacité du fait des spires imbriquées.

Alternativement, l'antenne relais 5 (ou 5Bà peut comprendre une capacité sous forme de composant de circuit intégré ou CMS (circuit monté en surface). L'avantage est de confiner la fonction capacité dans un petit circuit peu étendu (au lieu de plaques de condensateur pouvant perturber la réception de champ électromagnétique) pour conserver une perméabilité électromagnétique de la matière située dans la surface de couplage de l'antenne relais (ou antenne 5B) . Historiquement, une antenne relais comportait des plaques de condensateur assez étendues pour former une capacité (brevet EP1031939 (B1).

L'invention permet d'optimiser le poids maximal de la plaque métallique d'une carte à puce métallique. Elle permet de conserver un poids maximal et des performances radiofréquences optimisées.

L'art antérieur publié ne permettait pas d'avoir des cartes métalliques aussi lourdes avec performances suffisantes pour satisfaire les standards de communication notamment ISO 14443 & EMVCO. Ces cartes nécessitaient en outre d'effectuer une fente 11 ou (entrefer) s'étendant du bord d'une plaque jusqu'à un espace de réception d'un module à antenne ou de la cavité 7 (fente 12).

Les figures 9 et 10 illustrent une étape du procédé de fabrication d'une carte à puce radiofréquence 1A selon un mode de réalisation comprenant une fente 11 dans une plaque en métal 4. (La figure 9 est similaire à celle de la figure 1) .

La carte destinée à être fabriquée comprend un corps de carte (similaire à celui 22 de la figure 2 ou 32 de la figure 10) et contenant une plaque métallique 4 formant une boucle autour d'un évidement ou un espace de réception d'une antenne et d'un substrat (ou support). La plaque peut avoir différente formes de contour périphérique et la cavité peut aussi avoir des formes variées. L'important étant d'avoir une plaque de métal entourant l'espace ou la cavité. La plaque selon l'invention comprend une séparation ou interruption dans le parcours périphérique de la plaque afin de former une boucle conductrice électriquement autour de l'évidement (ou cavité ou logement 7). La carte comprend une fente 11 s'étendant à travers la boucle 4. La fente interrompt la boucle sur toute la largeur de la boucle. Le Jeu traverse l'épaisseur de la plaque.

La carte comprend également une couche externe polymère 17 et 15 couvrant chacune une des faces principales 14, 18 de ladite plaque. Le bord 9 de la plaque 4 est également destiné préférentiellement à être visible de l'extérieur du corps de carte 32 (comme le corps 22).

Selon une caractéristique, le procédé peut comprendre l'une des étapes suivantes :
- remplissage partiellement de la fente 11 ou du jeu J par un matériau ayant un coefficient d'opacité proche de celui de la plaque métallique. Cette solution est avantageuse surtout pour éviter les défauts visuels par transparence ou lorsque la fente ne débouche pas sur la tranche, la plaque en métal ne s'étendant pas jusqu'à la tranche périphérie de la carte.
- ou remplissage ou masquage de la fente ou du jeu par un matériau ayant un L.A.B représentant au moins 80 % du L.A.B de la plaque métallique ou ayant un écart de couleur DE*94 inférieur à 4 % voire 10 %. Cette solution est avantageuse surtout dans le cas où une fente débouche sur la tranche de la carte afin d'éviter de voir une différence de couleur (ou chromaticité) ou d'aspect au moins sur la tranche de la carte.

Toutefois dans tous les exemples, des améliorations atténuant les défauts d'aspect peuvent être constatées en ayant un L.A.B du support d'antenne (par rapport à celui de la plaque métallique) supérieur à 60 % ou 70 % ou idéalement supérieur à 80 % ou 90 % jusqu'à être parfaitement ton sur ton avec un L.A.B de 100 %, selon la qualité visuelle recherchée.

Ces mêmes valeurs de coefficient de 60 % à 100 % peuvent être appliquées aussi par rapport au critère d'opacité du support d'antenne par rapport à l'opacité de la plaque. Dans tous les exemples, la valeur d'opacité du support d'antenne (insert ou inlay à antenne) représente au moins 80 % de la valeur l'opacité de la plaque de métal.

Ainsi, vu de l'extérieur, la tranche de la carte paraît homogène. De même, vu par transparence, la fente est moins visible.

S'agissant d'une plaque en inox, l'invention prévoit d'utiliser une matière grise plutôt que blanche.

Différent procédés ci-dessous de fabrication ont été sélectionnés par les inventeurs pour leurs avantages.

Selon une caractéristique qui n'est pas selon l'invention, le procédé comprend les étapes d'insertion d'un substrat support d'interface radiofréquence à antenne à l'intérieur de ladite boucle et d'une matière polymère de remplissage à l'intérieur de ladite fente.

En effet, non-conforme à l'invention, le procédé peut prévoir de remplir la fente indépendamment ou non de l'évidement ou espace 7 de réception de l'antenne. Par exemple, l'espace 7 peut être rempli conformément aux différents modes des figures précédentes tandis que la fente est remplie avec un matériau distinct de celui dans l'espace de réception 7 par tout procédé connu.

Il peut s'agir notamment d'une distribution de matière par seringue ou analogue sous forme liquide, ou de l'insertion d'un bâtonnet de la largeur et profondeur de la fente indépendamment du substrat d'antenne (notamment 25). La matière est de préférence de la même couleur (ou même chromaticité) que la plaque de métal ou boucle 4.

Pour éviter une visibilité de la fente par transparence, la matière peut présenter en outre une opacité proche de celle conférée par la plaque de métal.

Selon une caractéristique ou mode de réalisation selon l'invention, la matière de remplissage (polymère ou autre) est obtenue par découpe du substrat support avec une excroissance périphérique 11E formant une languette à partir d'un substrat support intermédiaire 50. La position et forme de l'excroissance 11E correspondent à la position et forme de la fente de manière la remplir lors de l'insertion du substrat support 55 à l'intérieur du logement 7.

Ce mode est illustré figure 11. Dans un premier temps, on réalise une pluralité d'antenne 55 sur un substrat support principal ou intermédiaire 50 par tout moyen connu de réalisation d'antenne (incrustation de fil conducteur par ultrasons ou sérigraphie, gravure...) .

Puis le procédé prévoit une découpe ou extraction de chaque substrat d'antenne 55 avec son antenne 5 et son excroissance 11E en forme de languette dont la forme et épaisseur correspondent à celles de la fente 11. La découpe ou extraction peut être effectuée notamment par laser, poinçonnage, estampage, etc.

L'étape d'extraction ou découpe de la languette solidaire du substrat, dans le procédé de fabrication d'une carte à puce, peut s'effectuer indépendamment de la couleur (chromaticité) ou de la nature de la matière composant le substrat.

Ce procédé ci-dessus peut être indépendant de la problématique d'aspect de la fente de la carte évoquée précédemment.

Ce procédé de fabrication de carte à puce, quelle que soit la couleur (ou chromaticité) ou nature de la matière, peut s'appliquer à tous les modes de réalisation avec fente décrit dans la présente description.

A la figure 10, le procédé prévoit d'insérer chaque substrat support d'antenne 55 avec son excroissance de matière de remplissage 11E, dans un évidement ou espace de réception 7 prolongé d'une fente 11.

Le cas échéant, l'antenne peut être réalisée par tout moyen connu après formation (notamment découpe, moulage) du substrat d'antenne aux bonnes dimensions de la cavité de réception du substrat.

L'antenne peut être réalisée notamment une fois que le substrat est reportée dans la cavité par tout moyen connu tel que incrustation de fil, sérigraphie, gravure, pulvérisation de métal.

A la figure 10, le procédé prévoit d'insérer chaque substrat support d'antenne 55 avec son excroissance de matière de remplissage 11E, dans un évidement ou espace de réception 7 prolongé d'une fente 11.

Après insertion, le procédé peut prévoir de préférence l'ajout de feuilles 14 et 17 de recouvrement sur les faces opposées de la plaque de métal 4.

L'ensemble peut être laminé à chaud ou avec un adhésif thermofusible et/ou thermodurcissable faisant adhérer la plaque aux feuilles externes 15, 17. Au cours de la lamination (ou laminage), le substrat support 55 peut être choisi ou configuré en dimensions (épaisseur, largeur, longueur volume et matière (exemple polymère thermofusible ou thermo durcissable) pour fluer dans l'espace 7 et s'étendre jusqu'au bord d'évidement ou espace 7.

Le bord de la carte peut être poli mécaniquement pour supprimer des éventuelles bavures, coulures suite à la lamination (ou opération de laminage).

Ainsi, avec un choix de matériau proche de l'opacité de la plaque en métal et en fluant jusqu'au bord de l'espace, des éventuelles discontinuités ou jeux entre le bord interne de la plaque et le substrat support d'antenne, ne sont pas visibles par transparence.

Selon une autre caractéristique ou mode de réalisation, un film opaque peut être disposé à l'aplomb de la fente 11 sur au moins un des côtés de ladite plaque. La fente peut être remplie au moins partiellement pour compléter l'épaisseur et/ou longueur d'une excroissance logée dedans.

La fente peut être tellement fine et nécessiter peu de volume de matière de remplissage que la matière de fluage de couche disposée en surface du métal suffit pour la remplir ou compléter une excroissance qui occuperait un volume partiel de la fente sur la longueur ou épaisseur.

Dans l'exemple, une portion de film opaque peut être placée et s'étendre localement en regard de la fente 11. La fente 11 peut être remplie par le fluage du matériau de la feuille de recouvrement 15, 17 ou via la matière d'une feuille adhésive ou d'un film adhésif ou d'une résine d'adhésion entre la plaque et les feuilles 14, 17. La matière de la feuille, film ou résine d'adhésion ou de remplissage peut avoir les propriétés souhaitées de couleur ou de chromaticité et/ou d'opacité proche de celle de la plaque de métal ou comme expliqué pour l'excroissance 11E.

Le cas échéant, le bord de l'excroissance débouchant sur la tranche de la carte peut être colorié notamment par impression jet d'encre.

Un ensemble de cartes, formant un lot, peut être présenté à une imprimante en ayant les cartes serrées les unes contre les autres afin d'effectuer une impression graphique sur toutes les cartes du lot en une seule opération.

La couleur (ou chromaticité) peut être choisie le plus proche de l'apparence du métal.

Le cas échéant, le procédé peut prévoir d'imprimer des particules métalliques dont l'apparence est proche du métal à imiter constituant la plaque de métal.

A la figure 12, le substrat d'antenne 55 à découper diffère de ceux de la figure 8 en ce que l'antenne 5B est destinée à être directement connectée (ohmiquement ou électriquement) à un module à puce de circuit intégré (ou électronique) lorsqu'il est encarté dans une cavité du corps de carte. L'antenne comporte des portions terminales de connexion 56, 57 à un module à puce électronique qui sont mises à jour lors d'une réalisation d'une cavité sur la surface principale de la feuille supérieure 17 d'une carte.

Cette forme d'antenne 5B peut venir se substituer à l'antenne relais 5 de tous les exemples ou modes de réalisation précédents notamment figure 10 et 11.

Selon une alternative non-conforme à l'invention, le substrat d'antenne avec une excroissance en forme de languette peut être obtenu par moulage. L'antenne peut être gravée, incrustée ou sérigraphiée ou déposer par impression notamment jet de matière conductrice sur le substrat d'antenne.

Selon une autre alternative non-conforme à l'invention, le substrat d'antenne avec sa languette peut être surmoulé sur une antenne préformée à l'avance. Ainsi par exemple, l'antenne peut être disposée au fond du logement de la plaque de métal et une résine peut être coulée dans le logement qui sert d'espace de moulage.

Dans tous ces exemples, la languette présente à une continuité homogène de matière au niveau de sa jonction avec le substrat d'antenne.

Par ailleurs, l'invention peut utiliser une modèle « L.A.B. » qui est un modèle de représentation des couleurs développé en 1976 par la Commission internationale de l'éclairage (CIE) : « L » représente la clarté, qui va de 0 (noir) à 100 (blanc).

« A » représente la gamme de l'axe rouge (valeur positive) -> vert (négative) en passant par le gris (0).

« B » représente la gamme de l'axe jaune (valeur positive) -> bleu (négative) en passant par le gris (0).

Les valeurs (positives ou négatives) de L.A.B données selon l'invention peuvent s'appliquer de préférence à chaque composante L, A et B. En particulier, la valeur de B doit représenter au moins 80 % de la valeur B de la plaque. Et idem pour L et A.

Toutefois, la valeur du pourcentage peut être différente pour chaque composante par exemple plus de 80 % pour A et B et un peu moins par exemple 65 % pour la clarté L.

L'important pouvant être d'atténuer le défaut visuel en ayant un aspect du support d'antenne distinct de celui des supports d'antenne de couleur claire voire blanche des supports d'antenne actuellement utilisés.

Ainsi la couleur grise cible comme étant proche d'un Pantone 877. Pantone qui peut se définir comme suit en terme de L.A.B dans un espace couleur L.A.B CIELAB L > 55 ; 0.5 < A < 1.5 ; 0.5 < B < 2.

## Revendications

1. Procédé de fabrication d'une carte à puce radiofréquence (1A, 2A, 3A) comprenant l'étape de formation d'un corps de carte contenant une plaque métallique (4) formant une boucle autour d'un logement (7) de réception d'un substrat d'antenne, une fente (11) s'étendant du logement vers la périphérie de la plaque à travers la boucle ou la plaque, ladite fente étant remplie d'une matière de remplissage isolante, ladite matière de remplissage étant obtenue au moins partiellement par de la matière d'une excroissance en forme de languette (11E) du substrat d'antenne (55, 55B) et formée avec ledit substrat d'antenne avant son insertion dans la carte, **caractérisé en ce que** ladite languette est découpée en même temps que le substrat d'antenne de sorte à présenter une continuité homogène de matière au niveau de sa jonction avec ledit substrat d'antenne.

2. Procédé selon la revendication précédente, **caractérisé en ce que** ladite excroissance en forme de languette (11E) et le substrat d'antenne (55, 55B) sont découpés dans un substrat principal intermédiaire (50).

3. Procédé selon l'une des revendications précédentes, **caractérisé en ce qu'**il comprend une étape d'insertion du substrat (25, 55, 55B) d'antenne (5, 5B) à l'intérieur du logement et d'insertion de la languette (11E) à l'intérieur de ladite fente (11) en une seule opération.

4. Procédé selon l'une des revendications précédentes, **caractérisé en ce qu'**il comprend une étape de placement de la plaque sur le substrat (25, 55, 55B) d'antenne (5, 5B) de manière que le logement de plaque reçoive à l'intérieur le substrat d'antenne et ladite fente (11) de plaque reçoive à l'intérieur la languette (11B), en une seule opération.

5. Procédé selon l'une des revendications précédentes, **caractérisé en ce que** ladite fente (11) est partiellement remplie par un matériau (15, 17) ayant un coefficient d'opacité proche au moins à 80 % de celui de la plaque métallique et/ou par un matériau (11E) présentant un écart colorimétrique inférieur à 10 % de celui de ladite plaque.

6. Procédé selon l'une des revendications précédentes, **caractérisé en ce qu'**un film ou un adhésif ou une résine présentant une matière opaque ou étant d'une couleur proche de celle de la plaque métallique est disposée à l'aplomb de la fente (11) ou d'un jeu (J) situé entre le bord périphérique du substrat d'antenne et le bord interne du logement de la plaque, sur au moins un des côtés principaux de ladite plaque.

7. Procédé selon l'une des revendications précédentes, **caractérisé en ce qu'**il comprend les étapes de :
- formation d'un insert métallique (4) de corps de carte contenant ladite plaque en forme de boucle autour d'un logement (7) perméable au champ radiofréquence débouchant sur les deux faces principales de ladite plaque, ladite plaque s'étendant ou non jusqu'à au moins un des bords de la carte,
- insertion d'une antenne relais (5) ou d'une antenne (5B) de transpondeur à l'intérieur et/ou en regard du logement (7),
- agencement d'un module (10, 26) équipé ou non d'une antenne de module radiofréquence (23), sur le corps de carte en regard de l'antenne relais ou de plages de connexion de l'antenne de transpondeur pour un couplage radiofréquence avec l'antenne relais ou pour une connexion électrique avec l'antenne de transpondeur (5B).

8. Procédé selon la revendication précédente, **caractérisé en ce que** l'antenne relais (5) ou l'antenne de transpondeur (5B) est réalisée sur ledit substrat support intermédiaire (50) avec une pluralité d'antennes relais (5) ou d'antennes (5B) de transpondeur, chaque antenne relais ou antenne de transpondeur étant ensuite individualisée avec son substrat d'antenne (55, 55B) et ladite excroissance (11E) en forme de languette, par extraction ou découpe du substrat d'antenne principal intermédiaire.

9. Procédé selon l'une des revendications précédentes, **caractérisé en ce qu'**il comprend une étape de recouvrement de chaque face principale opposée de ladite plaque par une couche externe de recouvrement.

10. Substrat d'antenne (55, 55B) configuré pour être inséré dans un logement de carte à puce radiofréquence (1A, 2A, 3A) ledit logement (7) débouchant sur la périphérie de la carte à travers une fente, ladite carte comprenant une plaque métallique (4) formant une boucle autour du logement, ladite fente (11) s'étendant du logement vers la périphérie de la plaque à travers la boucle ou la plaque, ledit substrat d'antenne (55, 55B) comprenant une excroissance en forme de languette (11E) pour constituer une matière de remplissage au moins partiel de ladite fente (11), **caractérisé en ce que** ladite languette est découpée en même temps que le substrat d'antenne de sorte à présenter une continuité homogène de la matière du substrat support d'antenne au niveau de leur jonction.

11. Carte à puce **caractérisée en ce qu'**elle comprend ledit substrat (25, 55, 55B) d'antenne (5, 5B) selon la revendication précédente inséré à l'intérieur du logement, ladite languette (11E) étant insérée à l'intérieur de ladite fente (11).

12. Carte selon la revendication précédente, **caractérisé en ce que** ladite fente (11) est partiellement remplie par un matériau (15, 17) ayant un coefficient d'opacité proche au moins à 80 % de celui de la plaque métallique et/ou par un matériau (11E) présentant un écart colorimétrique inférieur à 10 % de celui de ladite plaque.

13. Carte selon la revendication 12, **caractérisée en ce qu'**un film adhésif opaque ou coloré ou une résine adhésive opaque ou colorée est disposé à l'aplomb de la fente (11) ou d'un jeu (J) situé entre le bord périphérique du substrat d'antenne et le bord interne du logement de la plaque, sur au moins un des côtés principaux de ladite plaque.

14. Carte selon la revendication 12, **caractérisée en ce que** le film adhésif opaque ou coloré ou une résine adhésive opaque ou colorée est disposé(e) entre la plaque en métal et une feuille de couverture.

15. Carte selon la revendication 12, **caractérisée en ce qu'**elle comprend une couche colorée ou une couche de particules métalliques imitant l'aspect de la plaque de métal sur la matière de remplissage de la fente débouchant sur la tranche de la carte.

## Patentansprüche

1. Verfahren zur Herstellung einer Hochfrequenz-Chipkarte (1A, 2A, 3A) mit dem Schritt der Bildung eines Kartenkörpers, der eine Metallplatte (4) enthält, die eine Schleife um ein Gehäuse (7) zur Aufnahme eines Antennensubstrats bildet, wobei sich ein Schlitz (11) vom Gehäuse zum Umfang der Platte durch die Schleife oder die Platte erstreckt, wobei der Schlitz mit einem isolierenden Füllmaterial gefüllt ist, wobei das Füllmaterial zumindest teilweise durch Material einer zungenförmigen Ausstülpung (11E) des Antennensubstrats (55, 55B) erhalten wird und mit dem Antennensubstrat vor dessen Einsetzen in die Karte gebildet wird, **dadurch gekennzeichnet, dass** die zungenförmige Ausstülpung zusammen mit dem Antennensubstrat ausgeschnitten wird, so dass sie an ihrer Verbindungsstelle mit dem Antennensubstrat eine homogene Kontinuität des Materials aufweist.

2. Verfahren nach dem vorhergehenden Anspruch, **dadurch gekennzeichnet, dass** die zungenförmige Ausstülpung (11E) und das Antennensubstrat (55, 55B) aus einem Zwischen-Hauptsubstrat (50) ausgeschnitten werden.

3. Verfahren nach einem der vorhergehenden Ansprüche, **dadurch gekennzeichnet, dass** es einen Schritt des Einführens des Substrats (25, 55, 55B) der Antenne (5, 5B) in das Innere des Gehäuses und des Einführens der Lasche (11E) in das Innere des Schlitzes (11) in einem einzigen Arbeitsgang umfasst.

4. Verfahren nach einem der vorhergehenden Ansprüche, **dadurch gekennzeichnet, dass** es einen Schritt des Platzierens der Platte auf dem Substrat (25, 55, 55B) der Antenne (5, 5B) umfasst, so dass die Plattenaufnahme innen das Antennensubstrat aufnimmt und der Plattenschlitz (11) innen die Zunge (11B) aufnimmt, in einem einzigen Arbeitsgang.

5. Verfahren nach einem der vorhergehenden Ansprüche, **dadurch gekennzeichnet, dass** der Schlitz (11) teilweise mit einem Material (15, 17) gefüllt ist, das einen Opazitätskoeffizienten von mindestens annähernd 80 % desjenigen der Metallplatte hat, und/oder mit einem Material (11E), das eine Farbabweichung von weniger als 10 % derjenigen der Platte aufweist.

6. Verfahren nach einem der vorhergehenden Ansprüche, **dadurch gekennzeichnet, dass** eine Folie oder ein Klebstoff oder ein Harz, die/der/das ein undurchsichtiges Material aufweist oder eine Farbe hat, die der der Metallplatte ähnlich ist, senkrecht zu dem Schlitz (11) oder einem Spalt (J) zwischen der Umfangskante des Antennensubstrats und der Innenkante des Plattengehäuses auf mindestens einer der Hauptseiten der Platte angeordnet ist.

7. Verfahren nach einem der vorhergehenden Ansprüche, **dadurch gekennzeichnet, dass** es die folgenden Schritte umfasst:
- Bildung eines metallischen Kartenkörpereinsatzes (4), der die Platte in Form einer Schleife um eine für das Hochfrequenzfeld durchlässige Aufnahme (7) enthält, die an den beiden Hauptflächen der Platte mündet, wobei sich die Platte bis zu mindestens einem der Ränder der Karte erstreckt oder nicht,
- Einsetzen einer Relaisantenne (5) oder einer Transponderantenne (5B) in das Gehäuse und/oder gegenüber dem Gehäuse (7),
- Anordnung eines Moduls (10, 26), das mit einer Hochfrequenzmodulantenne (23) ausgestattet ist oder nicht, auf dem Kartenkörper gegenüber der Relaisantenne oder den Anschlussflächen der Transponderantenne für eine Hochfrequenzkopplung mit der Relaisantenne oder für eine elektrische Verbindung mit der Transponderantenne (5B).

8. Verfahren nach dem vorhergehenden Anspruch, **dadurch gekennzeichnet, dass** die Relaisantenne (5) oder Transponderantenne (5B) auf dem Zwischenträgersubstrat (50) mit einer Vielzahl von Relaisantennen (5) oder Transponderantennen (5B) hergestellt wird, wobei jede Relaisantenne oder Transponderantenne anschließend mit ihrem Antennensubstrat (55, 55B) und der zungenförmigen Ausstülpung (11E) durch Herausziehen oder Ausschneiden aus dem Zwischen-Hauptantennensubstrat individualisiert wird.

9. Verfahren nach einem der vorhergehenden Ansprüche, **dadurch gekennzeichnet, dass** es einen Schritt umfasst, bei dem jede gegenüberliegende Hauptfläche der Platte mit einer äußeren Deckschicht bedeckt wird.

10. Antennensubstrat (55, 55B), das so konfiguriert ist, dass es in ein Gehäuse einer Hochfrequenz-Chipkarte (1A, 2A, 3A) eingesetzt werden kann, wobei das Gehäuse (7) am Umfang der Karte durch einen Schlitz mündet, wobei die Karte eine Metallplatte (4) umfasst, die eine Schleife um das Gehäuse bildet, wobei sich der Schlitz (11) vom Gehäuse zum Umfang der Platte durch die Schleife oder die Platte hindurch erstreckt, das Antennensubstrat (55, 55B) eine Ausstülpung in Form einer Zunge (11E) umfasst, um ein Material zur zumindest teilweisen Füllung des Schlitzes (11) zu bilden, **dadurch gekennzeichnet, dass** die Zunge gleichzeitig mit dem Antennensubstrat ausgeschnitten wird, so dass eine homogene Kontinuität des Materials des Antennenträgersubstrats an ihrer Verbindungsstelle vorliegt.

11. Chipkarte **dadurch gekennzeichnet, dass**sie das Substrat (25, 55, 55B) der Antenne (5, 5B) nach dem vorhergehenden Anspruch umfasst, das in das Innere des Gehäuses eingesetzt ist, wobei die Lasche (11E) in das Innere des Schlitzes (11) eingesetzt ist.

12. Karte nach dem vorhergehenden Anspruch, **dadurch gekennzeichnet, dass** der Schlitz (11) teilweise mit einem Material (15, 17) gefüllt ist, das einen Opazitätskoeffizienten von mindestens annähernd 80 % desjenigen der Metallplatte hat, und/oder mit einem Material (11E), das eine Farbabweichung von weniger als 10 % derjenigen der Platte aufweist.

13. Karte nach Anspruch 12, **dadurch gekennzeichnet, dass** ein opaker oder farbiger Klebefilm oder ein opakes oder farbiges Klebeharz senkrecht zu dem Schlitz (11) oder einer Lücke (J) zwischen der Umfangskante des Antennensubstrats und der Innenkante des Plattengehäuses auf mindestens einer der Hauptseiten der Platte angeordnet ist.

14. Karte nach Anspruch 12, **dadurch gekennzeichnet, dass** der undurchsichtige oder farbige Klebefilm oder ein undurchsichtiges oder farbiges Klebeharz zwischen der Metallplatte und einer Deckfolie angeordnet ist.

15. Karte nach Anspruch 12, **dadurch gekennzeichnet, dass** sie eine farbige Schicht oder eine Schicht aus Metallpartikeln enthält, die das Aussehen der Metallplatte auf dem Füllmaterial des Schlitzes nachahmt, der in den Rand der Karte mündet.

## Claims

1. A method of making a radio frequency chip card (1A, 2A, 3A) comprising the step of forming a card body containing a metal plate (4) forming a loop around a recess (7) for receiving an antenna substrate, a slot (11) extending from the recess to the periphery of the plate through the loop or the plate, said slot being filled with an insulating filler material, said filler material being obtained at least partially by the material of a tongue-shaped protrusion (11E) of the antenna substrate (55, 55B) and formed with said antenna substrate before its insertion into the card, **characterized in that** said tongue is cut at the same time as the antenna substrate so as to have a homogeneous continuity of material at its junction with said antenna substrate.

2. The method according to the preceding claim, **characterized in that** said tongue-shaped protrusion (11E) and the antenna substrate (55, 55B) are cut from an intermediate main substrate (50).

3. The method according to one of the preceding claims, **characterized in that** it comprises a step of inserting the antenna (5, 5B) substrate (25, 55, 55B) into the recess and inserting the tongue (11E) into said slot (11) in a single operation.

4. The method according to one of the preceding claims, **characterized in that** it comprises a step of placing the plate on the antenna (5, 5B) substrate (25, 55, 55B) such that the plate recess receives the antenna substrate therein and said plate slot (11) receives the tongue (11B) therein, in a single operation.

5. The method according to one of the preceding claims, **characterized in that** said slot (11) is partially filled by a material (15, 17) having an opacity coefficient close to at least 80% of that of the metal plate and/or by a material (11E) having a colorimetric deviation less than 10% of that of said plate.

6. The method according to one of the preceding claims, **characterized in that** a film or an adhesive or a resin having an opaque material or being of a color close to that of the metal plate is disposed in line with the slot (11) or a gap (J) between the peripheral edge of the antenna substrate and the inner edge of the plate recess, on at least one of the main sides of said plate.

7. The method according to one of the preceding claims, **characterized in that** it comprises the steps of:
- forming a metal insert (4) of the card body containing said plate in the form of a loop around a recess (7) permeable to the radio frequency field opening onto the two main faces of said plate, said plate extending or not to at least one of the edges of the card,
- inserting a relay antenna (5) or a transponder antenna (5B) into and/or opposite the recess (7),
- arranging a module (10, 26) equipped or not with a radio frequency module antenna (23), on the card body opposite the relay antenna or transponder antenna connection pads for a radio frequency coupling with the relay antenna or for an electrical connection with the transponder antenna (5B).

8. The method according to the preceding claim, **characterized in that** the relay antenna (5) or transponder antenna (5B) is realized on said intermediate support substrate (50) with a plurality of relay antennas (5) or transponder antennas (5B), each relay antenna or transponder antenna being subsequently individualized with its own antenna substrate (55, 55B) and said tongue-shaped protrusion (11E), by extracting or cutting from the intermediate main antenna substrate.

9. The method according to one of the preceding claims, **characterized in that** it comprises a step of covering each opposite main face of said plate with an external covering layer.

10. An antenna substrate (55, 55B) configured to be inserted into a recess of a radio frequency chip card (1A, 2A, 3A), said recess (7) opening onto the periphery of the card through a slot, said card comprising a metal plate (4) forming a loop around the recess, said slot (11) extending from the recess to the periphery of the plate through the loop or the plate, said antenna substrate (55, 55B) comprising a tongue-shaped protrusion (11E) to constitute an at least partial filling material of said slot (11), **characterized in that** said tongue is cut at the same time as the antenna substrate so as to have a homogeneous continuity of the material of the antenna support substrate at their junction.

11. A chip card **characterized in that** it comprises said antenna (5,5B) substrate (25, 55, 55B) according to the preceding claim inserted into the recess, said tongue (11E) being inserted into said slot (11).

12. The card according to the preceding claim, **characterized in that** said slot (11) is partially filled by a material (15, 17) having an opacity coefficient close to at least 80% of that of the metal plate and/or by a material (11E) having a colorimetric deviation less than 10% of that of said plate.

13. The card according to claim 12, **characterized in that** an opaque or colored adhesive film or an opaque or colored adhesive resin is arranged plumb with the slot (11) or a gap (J) situated between the peripheral edge of the antenna substrate and the inner edge of the recess of the plate, on at least one of the main sides of said plate.

14. The card according to claim 12, **characterized in that** the opaque or colored adhesive film or an opaque or colored adhesive resin is arranged between the metal plate and a cover sheet.

15. The card according to claim 12, **characterized in that** it comprises a colored layer or a layer of metallic particles imitating the appearance of the metal plate on the material filling the slot opening on the edge of the card.
